# EUROPÄISCHE PATENTSCHRIFT

(11) **EP 0 728 573 B1**
(45) Veröffentlichungstag und Bekanntmachung des Hinweises auf die Patenterteilung: **09.05.2001**
(21) Anmeldenummer: 96102237.3
(22) Anmeldetag: 15.02.1996
(51) Int. Cl.: B30B 15/04, B23Q 1/26, B21J 9/02

(54) **Presse, insbesondere zum Massivumformen**
Press, in particular for forging
Presse, en particulier pour le forgeage

(30) Priorität: 24.02.1995 DE 19506521
(43) Veröffentlichungstag der Anmeldung: 28.08.1996
(73) Patentinhaber: Schuler Pressen GmbH & Co. KG, 73033 Göppingen (DE)
(72) Erfinder: Braun, Rainer, D-73033 Göppingen (DE); Augst, Rudolf, D-73032 Heiningen (DE)

(56) Entgegenhaltungen:
- DE-C- 507 690
- FR-A- 2 513 919
- FR-A- 2 534 521
- GB-A- 770 691
- US-A- 3 907 385
- PATENT ABSTRACTS OF JAPAN vol. 14, no. 295 (M-0990), 26.Juni 1990 & JP-A-02 093118 (COPAL ELECTRON CO LTD), 3.April 1990,

## Beschreibung

Zur Massivumformung, insbesondere zur mehrstufigen Massivumformung von Werkstücken durch Kaltfließprozesse werden Pressen verwendet, deren Stößel auf einem horizontalen Bett längsverschiebbar gelagert und durch eine Exzenterwelle über ein entsprechendes Pleuel angetrieben ist. An seiner Stirnseite ist der Stößel mit einer Reihe von auch als Patritzen bezeichneten Werkzeugen versehen. Diesen sind Matritzen zugeordnet, die an entsprechenden, den Werkzeugen gegenüberliegenden Stellen ortsfest gelagert sind, so daß mehrere, bspw. fünf jeweils aus einem stößelseitigen Werkzeug und einer Matritze bestehende Werkszeugstufen gebildet sind. Im Betrieb werden von einem Draht abgelängte Rohlinge nacheinander durch die Werkstückstufen getaktet, wobei in der Folge der in den Werkstückstufen ablaufenden Bearbeitungsvorgänge aus dem jeweiligen Rohling das gewünschte Werkstück entsteht.

Das den Stößel lagernde Bett muß sowohl die gesamte Masse des Stößels als auch die von diesem ausgehenden dynamischen Belastungen tragen können, ohne sich dabei nennenswert zu deformieren. Außerdem soll der Stößel möglichst spielfrei gelagert sein. Schon geringe dynamische Ungenauigkeiten in der Stößellagerung können zu Dejustagen an den Werkzeugen führen, so daß die damit durchgeführten Umformvorgänge Werkstücke von geringerer Genauigkeit erbringen.

Bei waagerechter Anordnung des Stößels, d.h. bei einer Bauform, bei der der Stößel in der Horizontalen bewegt wird, liegt dessen Bett außerdem unterhalb der Werkzeuge, so daß unter Umständen Verschmutzungen in das Bett gelangen und dort zu Schäden führen können.

Aus der DE 39 04 278 A1 ist eine Umformpresse bekannt, deren mittels eines Exzenterantriebes vertikal hin- und hergehend angetriebener Stößel an einem Gestell vertikal verschiebbar geführt ist. Stirnseitig ist an dem Stößel ein Umformwerkzeug gehalten, unterhalb dessen eine Matritze ortsfest gelagert ist.

Bei dieser Umformpresse ist die den Stößel führende Lagerung keinen nennenswerten Verschmutzungen unterworfen, die von dem Werkzeug oder der Matritze herrühren. Das Gewicht des Stößels wird von der Antriebseinrichtung getragen.

Aus der DE 26 31 598 A1 ist eine Stößelführung für eine Presse bekannt bei der ein Stößel an einem Maschinengestell in Gleitführungen gelagert ist. Der Stößel weist dazu an jeder seiner vier Seiten bei seinen Kanten zwei im Abstand parallel zueinander angeordnete Gleitschienen auf, die mit entsprechenden an dem Maschinengestell vorgesehenen Gleitstücken in Anlage stehen. Dabei sind die Gleitstücke, die auf drei Seiten des Stößels angeordnet sind, justierbar an dem Maschinengestell gehalten, lediglich die auf einer Seite des Stößels liegenden Gleitstücke sind fest.

Die Gleitstücke müssen justiert werden, um eine korrekte Führung des Stößels zu ermöglichen.

Es ist Aufgabe der Erfindung, eine Presse zu schaffen, die hohen dynamischen Belastungen standhält, die einen geringen Wartungsaufwand hat und mit der sich gute Bearbeitungsgenauigkeiten erreichen lassen.

Diese Aufgabe wird durch eine Presse mit den Merkmalen des Patentanspruches 1 gelöst.

Die Lagerung des Stößels mittels der Wälzkörperführung kann bei entsprechender Gestaltung der Wälzkörper und Dimensionierung der Führung spielfrei und steif ausgelegt werden. Dadurch wird eine präzise Führung des Stößels erreicht, wodurch die Werkzeuge in genauer Ausrichtung zu den Matritzen geführt werden. Die präzise Führung der Werkzeuge gestattet es, genauere Preßteile herzustellen, wobei außerdem der Werkzeugverschleiß vermindert ist.

Die Wälzkörperführung weist im Vergleich zu herkömmlichen Gleitführungen eine geringere Reibung auf. Dadurch ist im Bereich der Führung keine nennenswerte Wärmeentwicklung zu verzeichnen. Die geringere Eigenerwärmung kommt nicht nur der Präzision der Führung des Stößels zugute, sondern sie vereinfacht auch die Schmierung. Außerdem wird zur Bewegung des Stößels weniger Energie benötigt, so daß die von der Antriebseinrichtung aufgebrachte Antriebsenergie nahezu ausschließlich zum Umformen der Werkstücke dient.

Die Wälzkörperführung unterliegt nahezu keinem Verschleiß, so daß insbesondere etwaige Nachstellarbeiten oder dergleichen, wie sie von Gleitführungen bekannt sind, entfallen. Die Wartung der Presse ist dadurch wesentlich vereinfacht.

Wälzkörperführungen sind als Standardbauelemente in guter Qualität, d.h. in präziser Ausführung zu einem angemessenen Preis verfügbar. Dadurch wird die Konstruktion vereinfacht und die Kosten werden gesenkt.

Die Wälzkörperführung kann ohne größere Probleme teilweise in den Stößel hineinverlegt werden. Dazu wird die Wälzkörperführung an entsprechenden Stützen an dem Maschinenkörper aufgeständert. Bei dieser Anordnung ist die Wälzkörperführung den bei Pressen auftretenden typischen Verschmutzungen weitgehend entzogen. Insbesondere können weder Werkzeugschmiermittel noch Werkzeugabrieb oder Werkstückabrieb in die Führung gelangen. Durch die geschützte Lage in einem von einem Seitenabschnitt des Stößels überdeckten Bereich ist es möglich, die Wälzkörperführung über die gesamte Lebensdauer der Presse zu betreiben, ohne daß die Wälzkörperführung erneuert werden müßte.

Die Wälzkörperführung ist in allen radialen Richtungen gleichermaßen belastbar. Das heißt, sie nimmt Druck- und Zugkräfte gleichermaßen gut auf. Sie kann deshalb insbesondere an dem Stößel angreifende Biegemomente ableiten und den Stößel dabei sauber führen. Deshalb kann die Wälzkörperführung an dem Stößel an dessen Flanken, d.h. oberhalb und unterhalb des Stößels angeordnet werden, was bedeutet, daß die Führungsachse durch keines der an dem Stößel befestigten Werkzeuge geht. Dies bedeutet aber auch, daß unsymmetrische, durch unterschiedliche Werkzeugbelastungen auftretende und an dem Stößel angreifende Lasten gut von der Wälzkörperführung aufgenommen werden.

Der Stößel wird besonders präzise geführt, wenn zwei hintereinander angeordnete Wälzkörperführungen als Führungseinrichtung vorgesehen werden. Diese definieren vorzugsweise eine gemeinsame Führungsachse und sind in einem Abstand zueinander angeordnet, der das Ableiten von im Betrieb der Presse entstehenden und an dem Stößel angreifenden Kipp- oder Biegemomenten ermöglicht.

Wenn die Wälzkörperführung eine Rollenführung ist, wird eine besonders hohe Steifigkeit erreicht, die beträchtlich über der von bspw. auch denkbaren Kugelführungen liegt.

Eine einfache Rollenführung wird erhalten, wenn die Wälzkörperführung eine Zylinder-Längsführung ist. Diese weist eine Büchse mit zylindrischer Innenfläche und eine als Führungskörper dienende Welle oder Säule auf, zwischen denen Wälzkörper in entsprechenden Käfigen gehalten sind.

Eine hohe Steifigkeit wird mit Wälzkörpern erhalten, die mit einer Linienberührung auf ihren jeweiligen Laufflächen abrollen. Wenn der Führungskörper eine zylindrische Welle und das daran gelagerte Trägerteil eine Buchse ist, können vorteilhaft Profilrollen mit Satteltonnenform verwendet werden. Gegenüber Rollenführungen mit Zylinderrollen und planen Laufflächen ergibt sich hier der Vorteil, daß eine Verdrehung des Führungskörpers, nämlich der Welle, um seine bzw. ihre Längsachse für die Funktion der Wälzkörperführung unbeachtlich ist, so daß sich insbesondere der Zusammenbau problemlos mit geringem Justageaufwand durchführen läßt.

Sowohl eine einfache Herstellung als auch eine präzise Führung wird erreicht, wenn die beiden hintereinander angeordneten Wälzkörperführungen als Führungskörper eine gemeinsame durchgehende Welle aufweisen. Diese wird, wenn sie an dem Stößel gehalten ist, nach Einsetzen des Stößels in den Maschinenkörper in den Stößel eingeschoben und an diesem arretiert. Dieses kann von der Antriebsseite des Stößels her erfolgen, so daß kein Zugriff von der Seite her, d.h. durch den Maschinenkörper, erforderlich ist.

Obwohl es möglich ist, die Welle an dem Stößel dreifach, nämlich bspw. beidenends und an einer dritten, dazwischenliegenden Stelle abzustützen, hat es sich gezeigt, daß es ausreichend ist, die Welle lediglich zweifach mit entsprechenden Einspannvorrichtungen an dem Stößel zu halten. Eine besondere Steifigkeit insbesondere gegen Ende jedes Stößelhubes, bei dem dieser den eigentlichen Umformvorgang ausführt, wird erreicht, wenn die die Welle haltenden Einspannungen in Bezug auf die Führungsbüchsen derart angeordnet sind, daß sie bei Ende des Arbeitshubes des Stößels in unmittelbarer Nachbarschaft der Führungsbuchsen stehen. Selbst eine nicht übermäßig dick dimensionierte Welle ist bei einer solchen Anordnung gegen Ende des Arbeitshubes ausgesprochen steif, wenn zwischen den Führungsbüchsen und den Einspannungen lediglich wenige Millimeter Welle verbleiben.

Bei einer vorteilhaften Ausführungsform ist auch die zweite Führungseinrichtung, die den Stößel in Bezug auf eine Schwenkbewegung um die erste Führungseinrichtung lagert, als Rollenführung ausgebildet. Diese ist reibungsarm und ohne Nachjustage über lange Zeit verwendbar.

Es hat sich gezeigt, daß es zur Vermeidung von statischen Überbestimmungen vorteilhaft ist, für die zweite Rollenführung eine Führungsschiene mit zwei im Abstand parallel zueinander angeordneten ebenen Laufflächen zu verwenden, auf denen mit dem Stößel verbundene Rollenlaufschuhe abrollen.

Die Ausbildung insbesondere der ersten Führungseinrichtung als Wälzkörperführung ermöglicht es, wegen Ihrer Wartungsarmut und weil sie nicht nachjustiert zu werden braucht, den Maschinenkörper als geschlossenen Rahmen auszuführen, der den Stößel insbesondere in Bereichen seiner Antriebseinrichtung und seiner Führungseinrichtungen umschließt. Der Maschinenkörper wird dadurch sehr steif, was geringere Verwindungen zur Folge hat. Dadurch wird ein präziseres Arbeiten der Werkzeuge in Bezug auf die Matritzen und / oder eine Steigerung der Arbeitsgeschwindigkeit ermöglicht.

In der Zeichnung ist ein Ausführungsbeispiel der Erfindung dargestellt. Es zeigen:
- Fig. 1: eine Presse zum mehrstufigen Massivumformen, mit wälzgelagertem Stößel, in perspektivischer, teilweise aufgebrochener und stark schematischer Darstellung
- Fig. 2: die Presse nach Fig. 1 in einer schematisierten und teilweise geschnittenen Seitenansicht,
- Fig. 3: die Presse nach Fig. 1, in einer schematisierten Schnittdarstellung und in einem anderen Maßstab, und
- Fig. 3a: einen Wälzkörper, wie sie bei der Presse nach den Fign. 1 bis 3 zur Lagerung des Stößels verwendet sind, in einem anderen Maßstab und in Seitenansicht.

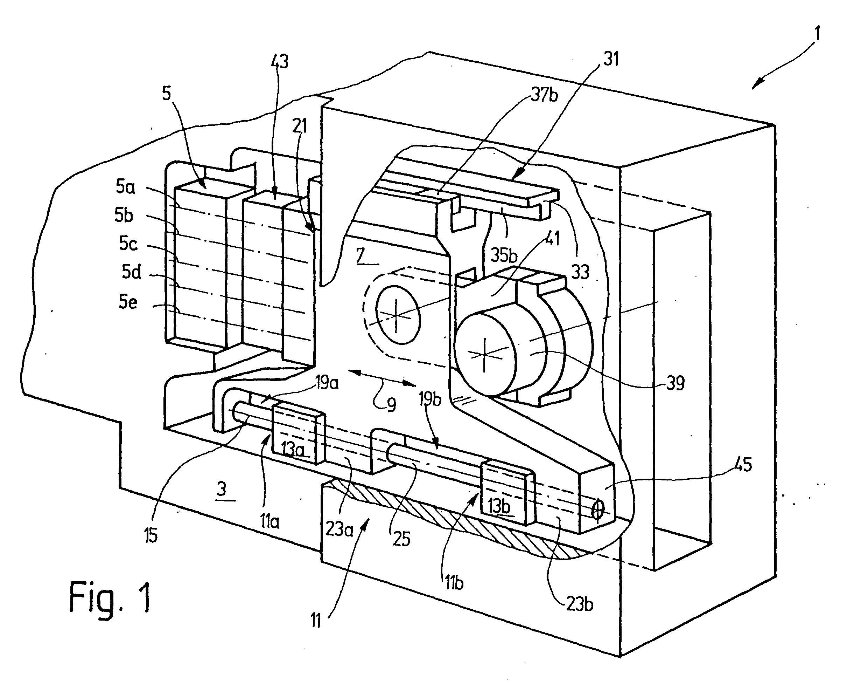

In Fig. 1 ist eine als Mehrstufenumformpresse zum Kaltfließpressen eingerichtete Presse 1 dargestellt, an deren Maschinenkörper 3 insgesamt fünf Matritzen 5a, 5b, 5c, 5d, 5e vertikal übereinander angeordnet und gehalten sind. Die Matritzen 5a, 5b, 5c, 5d, 5e entsprechen Werkstückspositionen oder -stufen, die nacheinander von einem Rohling durchlaufen werden, der auf diesem Wege stufenweise seine gewünschte Form erhält. Zum Umsetzen der Rohlinge aus der Matritze 5a in die folgenden Matritzen 5b, 5c, 5d bis zu der Matritze 5e ist eine nicht weiter dargestellte Transporteinrichtung vorgesehen.

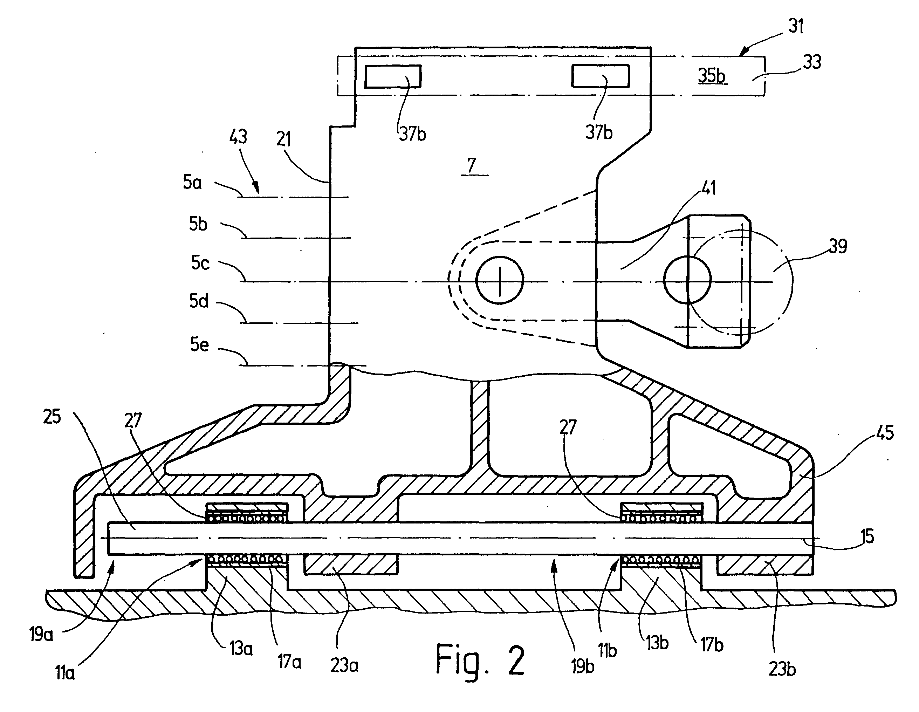

Den Matritzen 5 ist ein Stößel 7 zugeordnet, der in einer durch einen Pfeil 9 bezeichneten Hubrichtung linear verfahrbar ist. Dazu ist der Stößel 7 über Kugel- oder Rollenführungen 11, nämlich eine in Hubrichtung vorn liegende, vordere Kugel- oder Rollenführung 11a und eine hintere Kugel- oder Rollenführung 11b gelagert, die eine Linearführungseinrichtung bilden. Die Kugel- oder Rollenführungen 11a, 11b weisen fest mit dem Maschinenkörper 3 verbundene Trägerteile 13a, 13b auf, die zu einer gemeinsamen Führungsachse 15 koaxial angeordnete, im einzelnen aus Fig. 2 ersichtliche Führungsbüchsen 17a, 17b aufweisen.

Das Trägerteil 13a ragt in einen Aufnahmeraum 19a, der an dem Stößel 7 unmittelbar unterhalb seiner Stirnwand 21 vorgesehen ist. Entsprechend ragt das Trägerteil 13b in einen an dem Stößel 7 vorgesehenen Aufnahmeraum 19b, der wie der Aufnahmeraum 19a von der Führungsachse 15 durchsetzt wird. Ein den Aufnahmeraum 19a von dem Aufnahmeraum 19b trennender Abschnitt des Stößels 7 und ein von der Stirnwand 21 abliegendes Ende des Stößels 7 bilden jeweils Halterungen 23a, 23b für eine sich koaxial zu der Führungsachse 15 durch die Führungsbüchsen 17a, 17b erstrekkende und an dem Stößel 7 gehaltene Säule oder Welle 25.

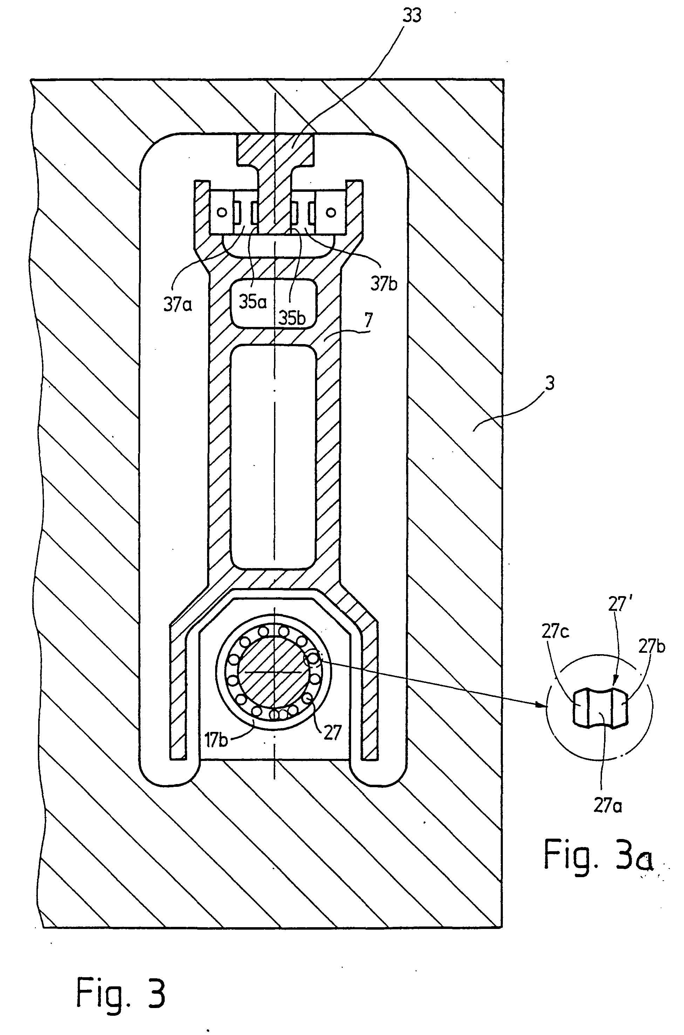

Der Durchmesser der Welle 25 ist derart bemessen, daß, wie die Fign. 2 und 3 zeigen, in dem Zwischenraum zwischen den Führungsbüchsen 17a, 17b und der Welle 25 Wälzkörper 27 Platz finden, die in nicht weiter dargestellten Käfigen gehalten sind. Die Wälzkörper 27 sitzen mit einer gewissen Vorspannung in den Führungsbüchsen 17a, 17b, so daß die axial verschiebbare Welle 25 spielfrei in den Führungsbüchsen 17a, 17b gelagert ist.

Als Wälzkörper 27 können bei einer einfachen Variante, wie es in den Fign. 2 und 3 lediglich beispielsweise dargestellt ist, Kugeln verwendet werden, die sowohl mit der Welle 25 als auch mit den Führungsbüchsen 17a und 17b in Punktberührung stehen. Bei einer verbesserten Ausführungsform ist jedoch keine Kugelführung sondern eine Rollenführung 11 verwendet, die anstelle der Kugeln Satteltonnen 27' aufweist, wie sie in Fig. 3a separat dargestellt sind. Diese weisen mittig einen mit der Welle 25 in Linienberührung stehenden, konkav gewölbten Wälzabschnitt 27a auf, an den sich beidseitig konvex gewölbte Abschnitte 27b, 27c anschließen, die derart geformt sind, daß sie mit der betreffenden Führungsbüchse 17a, 17b in Linienberührung stehen.

Zur weiteren Führung des Stößels 7 ist eine Linearführung 31 vorgesehen, die eine oberhalb des Stößels 7 angeordnete und mit ihrer Längserstreckung in Hubrichtung 9 verlaufende Führungsschiene 33 enthält, die mit dem Maschinenkörper 3 verbunden ist. Die Führungsschiene 33 weist, wie aus Fig. 3 hervorgeht, ebene seitliche Führungsflächen 35a, 35b auf, an denen mit dem Stößel 7 verbundene Rollenumlaufschuhe 37a, 37b abrollen. Die Linearführung 31 führt den Stößel 7, so daß dieser keine Schwenkbewegung um die Rollenführung 11 ausführen kann. Jedoch hat die Linearführung 31 keine Führungsaufgabe bezüglich der Vertikalrichtung. Abstandsveränderungen zwischen der Achse 25 und der Führungsschiene 33, bspw. in Folge einer Erwärmung des Maschinenkörpers 3 oder thermischer Ausdehnungen oder Schrumpfungen des Stößels 7, können somit nicht zum Klemmen der Rollenführung 11 bzw. der Linearführung 31 führen.

Zum Antrieb des Stößels 7 in Hubrichtung 9 ist eine Exzenterwelle vorgesehen, die über ein Pleuel 41 auf den Stößel 7 wirkt. Die Exzenterwelle 39 ist dabei beidseits des Pleuels 41 in dem Maschinenkörper 3 gelagert.

Die insoweit beschriebene Presse 1 arbeitet wie folgt:

Im Betrieb dreht sich die Exzenterwelle 39 kontinuierlich, wodurch der Stößel 7 eine hin und hergehende Bewegung in Richtung des Pfeiles 9 ausführt. An seiner Stirnseite 21 befestigte Werkzeuge 43 schwingen dabei im Gleichtakt auf die Matritzen 5 und von diesen wieder weg. Die genannte, jedoch nicht weiter dargestellte Transporteinrichtung setzt nach jedem Arbeitshub des Stößels 7 einen neuen Rohling in die Matritze 5a ein und versetzt ihn nach dem Arbeitstakt in die darunterliegende Matritze 5b sowie von dieser ausgehend taktweise weiter bis in die Matritze 5e.

Die Deformationen, die der Rohling auf diesem Weg erfährt, sind unterschiedlich stark, wobei er die stärkste Deformation bei den meisten Fällen in der Matritze 5a oder 5b erfährt. Die insgesamt auf den Stößel einwirkenden Kräfte summieren sich deshalb zu einer Gesamtkraft, die von der durch die Exzenterwelle 39 und das Pleuel 41 gebildeten Antriebseinrichtung aufgebracht werden muß, wobei ein Reaktionskippmoment entsteht, das von der Rollenführung 11a aufgenommen werden muß. Insbesondere gegen Ende des Arbeitshubes, wenn die Werkzeuge 43 tief in die jeweilige Matritze 5 eingedrungen sind, d.h. gegen Ende der Hubbewegung, kann eine erhebliche an dem Stößel 7 angreifende Kraft entstehen, die die Tendenz hat, diesen zu kippen. In diesem Stadium haben sich die Halterungen 23a, 23b den Trägerteilen 13a, 13b jedoch bis auf einen geringen Abstand angenähert, der wenige Millimeter, höchstens jedoch einige Zentimeter beträgt, so daß der jeweilige, die Kraft von der Halterung 23a auf das Trägerteil 13a und von der Halterung 23b auf das Trägerteil 13b übertragende Abschnitt der Welle 25 kurz und somit steif ist.

Wenn der Stößel 7 bei seiner Hubbewegung von den Matritzen 5 weg schwingt, laufen die in Käfigen gefaßten Wälzkörper 27 um den halben von dem Stößel durchlaufenen Hubweg aus den Führungsbüchsen 17a, 17b heraus. Dabei verringert sich zwar die Tragfähigkeit der Rollenführung 11, jedoch gehen von dem Stößel in diesem Stadium ohnehin nur geringe Kräfte aus. Bei dem nächsten Presshub laufen die Käfige mit den Wälzkörpern 27 wieder in die Führungsbüchsen ein, so daß gegen Ende des Presshubes, wenn die auf den Stößel 7 wirkenden und von diesem auf den Maschinenkörper 3 zu übertragenden Kräfte am größten sind, die volle Tragfähigkeit erreicht wird.

Während des Laufes der Presse 1 ist die Linearführung 31 theoretisch kräftefrei; sie übernimmt lediglich die seitliche Führung des Stößels 7.

Die in den Aufnahmeräumen 19a, 19b angeordnete Rollenführung 11a, 11b liegt soweit geschützt, daß von den Matritzen 5 oder Werkzeugen 43 herkommender Abrieb, Kühl- oder Schmiermittel nicht an die Rollenführungen 11a, 11b gelangen. Diese sind dadurch geschützt. Der Stößel 7 ist wie eine Schürze um die Rollenführungen 11a, 11b herumgeführt und begrenzt mit dem Maschinenkörper einen engen Spalt. Der Spalt liegt unterhalb der Rollenführungen 11a, 11b. Die Schürze hält die Innenräume 19a, 19b deshalb sauber.

Der um den Stößel 7 und die Exzenterwelle 39 geschlossene Maschinenkörper 3 erweist sich als sehr steif. Er ermöglicht, die Exzenterwelle 39 zu beiden Seiten des Stößels 7 an dem Maschinenkörper 3 zu lagern. Der Maschinenkörper 3 ist dabei bei der Rollenführung 11b durchgehend ausgebildet, so daß kein Zugang von der Seite her möglich ist. Die Montage der Rollenführungen 11a, 11b erfolgt im wesentlichen durch axiales Einschieben der Welle 25 in den Stößel 7 von seinem antriebsseitigen Ende 45 her.

Die Rollenführung ist wartungsarm und erfordert keine Einstellarbeiten, insbesondere kein wie auch immer geartetes regelmäßiges Nachstellen nach einer gewissen Betriebsdauer.

An einer Presse, die insbesondere zum mehrstufigen Kaltfließpressen vorgesehen ist, ist der über einen Exzenter angetriebene Stößel an einer flankenseitig, d.h. oberhalb und unterhalb desselben angeordneten Rollenführung geführt. Zur Unterstützung und zur seitlichen Ausrichtung des Stößels in Bezug auf die Rollenführung ist eine weitere Führungseinrichtung vorgesehen, die im Abstand parallel zu der Rollenführung angeordnet ist. Die Rollenführung lagert den Stößel reibungsarm und steif. Die Lebensdauer der Rollenführung ist hoch, wobei keine Nachjustagen erforderlich sind.

An einer Presse 1, die insbesondere zum mehrstufigen Kaltfließpressen vorgesehen ist, ist der über einen Exzenter angetriebene Stößel 7 an einer flankenseitig, d.h. oberhalb und unterhalb desselben angeordneten Rollenführung 11 geführt. Zur Unterstützung und zur seitlichen Ausrichtung des Stößels 7 in Bezug auf die Rollenführung 11 ist eine weitere Führungseinrichtung 31 vorgesehen, die im Abstand parallel zu der Rollenführung 11 angeordnet ist. Die Rollenführung 11 lagert den Stößel 7 reibungsarm und steif. Die Lebensdauer der Rollenführung 11 ist hoch, wobei keine Nachjustagen erforderlich sind.

## Patentansprüche

1. Presse (1), insbesondere zum mehrstufigen Massivumformen,
mit einem Stößel (7), der auf einer Stirnseite (21) wenigstens ein Werkzeug (43) zum Umformen von Werkstücken trägt und dem wenigstens eine ortsfest gelagerte Matritze (5) zugeordnet ist,
mit einer ersten Führungseinrichtung, mittels der der Stößel (7) an einem Maschinenkörper (3) linear verfahrbar gelagert und bezüglich einer Hubrichtung (9) geführt ist und die wenigstens eine mit dem Stößel (7) verbundene, erste Wälzkörperführung (11) mit einem an einem Führungskörper (25) längsverfahrbar gelagerten Trägerteil (13) aufweist,
mit einer zweiten Führungseinrichtung (31), die im Abstand parallel zu der ersten Führungseinrichtung angeordnet ist und mittels derer der Stößel (7) in jeder Hubstellung in einer vorgegebenen Ausrichtung zu dem Maschinenkörper (3) gehalten ist,
mit einer Antriebseinrichtung, die den Stößel (7) in einer hin- und hergehenden Bewegung antreibt, so daß sich das Werkzeug (43) auf die Matritze (5) zu und von dieser weg bewegt.

2. Presse nach Anspruch 1, dadurch gekennzeichnet, daß die Wälzkörperführung (11) eine Führungsachse (15) definiert, die durch kein Werkzeug (43) verlaufend festgelegt ist.

3. Presse nach Anspruch 1, dadurch gekennzeichnet, daß die erste Führungseinrichtung (11) zwei in Hubrichtung hintereinander angeordnete Wälzkörperführungen (11a, 11b) enthält.

4. Presse nach Anspruch 3, dadurch gekennzeichnet, daß die Wälzkörperführungen (11a, 11b) eine gemeinsame Führungsachse (15) definieren.

5. Presse nach Anspruch 1, dadurch gekennzeichnet, daß die Wälzkörperführung (11) eine Rollenführung ist.

6. Presse nach Anspruch 1, dadurch gekennzeichnet, daß die Wälzkörperführung (11) eine Zylinder-Längsführung ist, die eine Büchse (17) mit zylindrischer Innenfläche aufweist, die über Wälzkörper (27) auf einer zylindrischen, als Führungskörper dienenden Welle (25) gelagert ist.

7. Presse nach Anspruch 6, dadurch gekennzeichnet, daß die Wälzkörper (27) Profilrollen mit Satteltonnenform sind, die sowohl mit der Büchse (17) als auch mit der Welle (25) in Linienberührung stehen.

8. Presse nach Anspruch 1, dadurch gekennzeichnet, daß der Führungskörper (25) mit dem Stößel (7) verbunden ist und daß das Trägerteil (13) mit dem Maschinenkörper (3) verbunden ist.

9. Presse nach Anspruch 3 und 6, dadurch gekennzeichnet, daß die beiden hintereinander angeordneten Wälzkörperführungen (11a, 11b) als Führungskörper eine gemeinsame durchgehende Welle (25) aufweisen.

10. Presse nach Anspruch 9, dadurch gekennzeichnet, daß die Welle (25) an dem Stößel (7) zweifach abgestützt ist.

11. Presse nach Anspruch 1, dadurch gekennzeichnet, daß der Führungskörper (25) an dem Stößel (7) an einer bezogen auf die Hubrichtung (9) vorderen Einspannung (23a) und an einer im Abstand zu dieser angeordneten hinteren Einspannung (23b) gehalten ist, daß eines der Trägerteile (13b) zwischen den Einspannungen (23a, 23b) und das andere Trägerteil (13a) auf einem freien, aus der vorderen Einspannung (23a) ragenden Führungskörperende angeordnet ist.

12. Presse nach Anspruch 11, dadurch gekennzeichnet, daß die mit dem Maschinenkörper (3) verbundenen Trägerteile (13a, 13b) und die mit dem Stößel (7) verbundenen Einspannungen (23a, 23b) derart angeordnet sind, daß der Abstand zwischen jedem Trägerteil (13) und der ihm jeweils benachbarten Einspannung (23) minimal ist, wenn der Stößel (7) in seiner der Matritze (5) am weitesten angenäherten Position steht.

13. Presse nach Anspruch 1, dadurch gekennzeichnet, daß die zweite Führungseinrichtung (31) eine zweite Rollenführung ist, die den Stößel (7) in Bezug auf eine Schwenkbewegung um die erste Führungseinrichtung (11) lagert.

14. Presse nach Anspruch 1, dadurch gekennzeichnet, daß die zweite Führungseinrichtung (31) eine ortsfest an dem Maschinenkörper (3) gehaltene Führungsschiene (33) aufweist, an der wenigstens ein mit dem Stößel (7) verbundener Rollenumlaufschuh (37) verfahrbar gelagert ist.

15. Presse nach Anspruch 14, dadurch gekennzeichnet, daß die Führungsschiene (33) zwei im Abstand parallel zueinander angeordnete ebene Laufflächen (35a, 35b) aufweist, die jeweils mit zwei Rollenumlaufschuhen (37) in Anlage stehen.

16. Presse nach Anspruch 1, dadurch gekennzeichnet, daß der Maschinenkörper (3) ein geschlossener Rahmen ist, der beidseits des Stößels (7) jeweils einen Abschnitt aufweist, der sich von der. ersten Führungseinrichtung (11) zu der zweiten Führungseinrichtung (31) erstreckt.

## Claims

1. Press (1), in particular for multistage massive forming,
having a ram (7) which, on an end face (21), carries at least one tool (43) for forming workpieces and to which at least one female die (5) mounted in a fixed position is assigned,
having a first guide device, by means of which the ram (7) is mounted so as to be linearly displaceable on a machine body (3) and is guided relative to a stroke direction (9) and which has at least one first rolling-body guide (11) which is connected to the ram (7) and has a support part (13) mounted so as to be longitudinally displaceable on a guide body (25),
having a second guide device (31) which is arranged at a distance from and parallel to the first guide device and by means of which the ram (7) is held in each stroke position in a predetermined orientation relative to the machine body (3),
having a drive device which drives the ram (7) in a reciprocating movement, so that the tool (43) moves towards and away from the female die (5).

2. Press according to Claim 1, characterized in that the rolling-body guide (11) defines a guide axis (15) which is established in such a way as to pass through no tool (43).

3. Press according to Claim 1, characterized in that the first guide device (11) contains two rolling-body guides (11a, 11b) arranged one behind the other in the stroke direction.

4. Press according to Claim 3, characterized in that the rolling-body guides (11a, 11b) define a common guide axis (15).

5. Press according to Claim 1, characterized in that the rolling-body guide (11) is a roller guide.

6. Press according to Claim 1, characterized in that the rolling-body guide (11) is a cylindrical longitudinal guide which has a bush (17) with a cylindrical inner surface, the bush (17) being mounted via rolling bodies (27) on a cylindrical shaft (25) serving as guide body.

7. Press according to Claim 6, characterized in that the rolling bodies (27) are profile rollers with a saddle barrel shape which are in line contact with both the bush (17) and the shaft (25).

8. Press according to Claim 1, characterized in that the guide body (25) is connected to the ram (7), and in that the support part (13) is connected to the machine body (3).

9. Press according to Claims 3 and 6, characterized in that the two rolling-body guides (11a, 11b) arranged one behind the other have a common continuous shaft (25) as guide body.

10. Press according to Claim 9, characterized in that the shaft (25) is carried on the ram (7) in twin supports.

11. Press according to Claim 1, characterized in that the guide body (25) is held on the ram (7) on a front mount (23a) relative to the stroke direction (9) and on a rear mount (23b) arranged at a distance from the front mount (23a), in that one of the support parts (13b) is arranged between the mounts (23a, 23b) and the other support part (13a) is arranged on a free guide-body end projecting from the front mount (23a).

12. Press according to Claim 11, characterized in that the support parts (13a, 13b) connected to the machine body (3) and the mounts (23a, 23b) connected to the ram (7) are arranged in such a way that the distance between each support part (13) and the mount (23) adjacent to it in each case is minimal when the ram (7) is in its position brought closest to the female die (5).

13. Press according to Claim 1, characterized in that the second guide device (31) is a second roller guide which mounts the ram (7) with respect to a pivoting movement about the first guide device (11).

14. Press according to Claim 1, characterized in that the second guide device (31) has a guide rail (33) which is held in a fixed position on the machine body (3) and on which at least one recirculating roller shoe (37) connected to the ram (7) is mounted in a displaceable manner.

15. Press according to Claim 14, characterized in that the guide rail (33) has two flat running surfaces (35a, 35b) which are arranged at a distance from and parallel to one another and are each in contact with two recirculating roller shoes (37).

16. Press according to Claim 1, characterized in that the machine body (3) is a closed frame which, on both sides of the ram (7), in each case has a section which extends from the first guide device (11) to the second guide device (31).

## Revendications

1. Presse (1), en particulier pour le formage en plusieurs passes comprenant :
un coulisseau (7) qui porte, sur une face frontale (21), au moins un outil (43) pour le formage de pièces et auquel est associée au moins une matrice (5) montée en position fixe,
un premier dispositif de guidage, au moyen duquel le coulisseau (7) est monté mobile en translation linéaire le long d'un corps de machine (3) et est guidé par rapport à une direction de course (9), et qui présente au moins un premier guide à corps roulants (11) solidaire du coulisseau (7) et pourvu d'une partie support (13) montée mobile en déplacement longitudinal le long d'un corps de guidage (25),
un deuxième dispositif de guidage (31) qui est ménagé à distance et parallèlement au premier dispositif de guidage et au moyen duquel le coulisseau (7) est tenu dans un alignement prédéterminé par rapport au corps de machine (3) dans chaque position de la course,
un dispositif d'entraînement qui entraîne le coulisseau (7) en un mouvement alternatif, de sorte que l'outil (43) peut être rapproché de la matrice (5) et éloigné de celle-ci.

2. Presse selon la revendication 1, caractérisée en ce que le guide à corps roulants (11) définit un axe de guidage (15) qui est positionné pour ne traverser aucun outil (43).

3. Presse selon la revendication 1, caractérisée en ce que le premier dispositif de guidage (11) comprend deux guides à corps roulants (11a, 11b) disposés l'un derrière l'autre dans la direction de la course.

4. Presse selon la revendication 3, caractérisée en ce que les guides à corps roulants (11a, 11b) définissent un axe de guidage commun (15).

5. Presse selon la revendication 1, caractérisée en ce que le guide à corps roulants (11) est un guide à rouleaux.

6. Presse selon la revendication 1, caractérisée en ce que le guide à corps roulants (11) est un guide longitudinal cylindrique qui comporte une douille (17) pourvue d'une surface interne cylindrique qui est montée par l'intermédiaire de corps roulants (27) sur une barre cylindrique (25) servant de corps de guidage.

7. Presse selon la revendication 6, caractérisée en ce que les corps roulants (27) sont des rouleaux profilés ayant une forme de selle-tonneau qui sont en contact linéaire aussi bien avec la douille (17) qu'avec la barre (25).

8. Presse selon la revendication 1, caractérisée en ce que le corps de guidage (25) est solidaire du coulisseau (7) et en ce que la partie porteuse (13) est solidaire du corps de machine (3).

9. Presse selon les revendications 3 et 6, caractérisée en ce que les deux guides à corps roulants (11a, 11b) disposés l'un à la suite de l'autre comportent comme corps de guidage, un axe commun ininterrompu (25).

10. Presse selon la revendication 9, caractérisée en ce que la barre (25) prend appui sur le coulisseau (7) en deux points.

11. Presse selon la revendication 1, caractérisée en ce que le corps de guidage (25) est rendu solidaire du coulisseau (7) au droit d'une fixation avant (23a), par référence à la direction de la course (9), et au droit d'une fixation arrière (23b) disposée à distance de la première, en ce qu'une des parties porteuses (13b) est disposée entre les fixations (23a, 23b) et l'autre partie porteuse (13a) est disposée sur une extrémité libre du corps de guidage qui émerge de la fixation avant (23a).

12. Presse selon la revendication 11, caractérisée en ce que les parties porteuses (13a, 13b) solidaires du corps de machine (3) et les fixations (23a, 23b) solidaires du coulisseau (7) sont disposées de telle manière que la distance entre chaque partie porteuse (13) et la fixation (23) qui en est voisine soit minimale lorsque le coulisseau (7) se trouve dans sa position la plus rapprochée de la matrice (5).

13. Presse selon la revendication 1, caractérisée en ce que le deuxième dispositif de guidage (31) est un guide à rouleaux qui soutient le coulisseau (7) à l'encontre d'un mouvement de pivotement autour du premier dispositif de guidage (11).

14. Presse selon la revendication 1, caractérisée en ce que le deuxième dispositif de guidage (31) comporte un rail de guidage (33) maintenu en position fixe sur le corps de machine (3) et le long duquel est monté mobile en translation un patin (37) à circulation de rouleaux qui est solidaire du coulisseau (7).

15. Presse selon la revendication 14, caractérisée en ce que le rail de guidage (33) comporte deux surfaces de roulement planes (35a, 35b) disposées à distance l'une de l'autre et parallèlement entre elles et qui sont chacune en contact avec deux patins (37) à circulation de rouleaux.

16. Presse selon la revendication 1, caractérisée en ce que le corps de machine (3) est un cadre fermé qui comporte sur chaque côté du coulisseau (7) un segment qui s'étend du premier dispositif de guidage (11) au deuxième dispositif de guidage (31).
